# EUROPEAN PATENT SPECIFICATION

(11) **EP 4 275 648 B1**
(45) Date of publication and mention of the grant of the patent: **27.08.2025**
(21) Application number: 21932338.3
(22) Date of filing: 07.04.2021
(51) Int. Cl.: A61C 5/40, A61C 5/42, A61C 1/00

(54) **ROOT CANAL PREPARATION MACHINE AND ROOT CANAL PREPARATION MACHINE CONTROL METHOD**
WURZELKANALHERSTELLUNGSMASCHINE UND STEUERUNGSVERFAHREN FÜR WURZELKANALHERSTELLUNGSMASCHINE
MACHINE DE PRÉPARATION DE CANAL RADICULAIRE ET PROCÉDÉ DE COMMANDE DE MACHINE DE PRÉPARATION DE CANAL RADICULAIRE

(30) Priority: 23.03.2021 CN 202110308515
(43) Date of publication of application: 15.11.2023
(73) Proprietor: Guilin Woodpecker Medical Instrument Co., Ltd., Guilin, Guangxi 541004 (CN)
(72) Inventor: ZHANG, Benqin, Guilin, Guangxi 541004 (CN); CHEN, Zerong, Guilin, Guangxi 541004 (CN); LONG, Zhongshi, Guilin, Guangxi 541004 (CN); XU, Jiazhen, Guilin, Guangxi 541004 (CN)
(74) Representative: Loyer & Abello
(86) International application number: PCT/CN2021/085828
(87) International publication number: WO 2022/198720

(56) References cited:
- CN-A- 103 461 307
- CN-A- 105 534 613
- CN-A- 112 274 274
- CN-U- 209 661 828
- DE-A1- 102006 057 338
- JP-A- 2019 216 995
- US-A1- 2010 161 955
- US-A1- 2018 256 287

## Description

### Cross-Reference to Related Applications

The present disclosure claims priority to Chinese Patent Application No. 202110308515.8 filed on March 23, 2021.

### Technical Field

The present disclosure relates to the field of root canal treatment equipment, in particular, to an endo motor and a control method of endo motor.

### Background Art

In root canal treatment technology, one step is to prepare the root canal. In the process of root canal preparation, different nickel-titanium files need to be replaced to prepare the root canal, wherein the parameters such as the rotation speed or torque required by different nickel-titanium files are different.

At present, two methods are applied to adjust the parameters of the file: one is to directly adjust the parameters such as rotation speed or torque to the required parameters; the other is to preset the parameters of various file systems inside the machine, and adjust to the specific file system when needed. These two methods cannot avoid manual adjustment. When the number of parameters is large or the number of preset file systems is large, adjusting to the required parameters or file systems will be cumbersome.
For example, US2010161955A1 discloses method and device for programming a cordless handpiece for root canal treatment; CN112274274A discloses a safe endodontic treatment device; US2018256287A1 discloses a tool RFID recognition system for dental devices; and CN209661828U discloses a root canal motor device.

### Summary

The purpose of the present disclosure includes, for example, providing an endo motor and a control method of the endo motor, which can solve the problems of low efficiency and cumbersome operation when setting different working statuses for the endo motor.

Embodiments of the present disclosure can be implemented as follows.

In a first aspect, the present disclosure provides an endo motor, which includes a root canal handle, a root canal file, a motor and a first near field communication (NFC) device, wherein
both the motor and the root canal file are connected to the root canal handle; the motor is configured to drive the root canal file to rotate; the first near field communication device is electrically connected to the motor; and
the first near field communication device is configured to control the motor according to external information.

The first near field communication device includes an induction module and a control module, wherein the induction module is electrically connected to the control module; and
the induction module is configured to sense external information and generate an induction signal, and the control module is configured to receive the induction signal and control the motor according to the induction signal.

According to the invention, the external information includes a plurality of external electronic induction tags; and
the induction module is configured to sense any one of the external electronic induction tags and generate an induction signal, and the control module is configured to control the motor according to the induction signal.

In an optional embodiment, the induction module is connected with the root canal handle.

In an optional embodiment, the endo motor further includes a base, wherein the induction module is connected to the base.

In an optional embodiment, the endo motor further includes a plurality of label cards, each of which is provided with an external electronic induction tag.

In an optional embodiment, the endo motor further includes a second near field communication device communicatively connected to the first near field communication device, wherein the first near field communication device is configured to control the motor according to the information output by the second near field communication device.

In an optional embodiment, the endo motor further includes a base, wherein the second near field communication device is connected to the base.

In an optional embodiment, both the first near field communication device and the second near field communication device are NFC sensors or RFID radio frequency sensors.

A control method for an endo motor, the steps comprising:
bringing the first near field communication device and the external electronic induction tag or the second near field communication device close to each other, so that the first near field communication device senses external information and generates an induction signal; and
controlling the motor to run as the preset working status according to the induction signal.

The embodiments of the present disclosure include following beneficial effects.

The endo motor includes a root canal handle, a root canal file, a motor, and a first near field communication device; both the motor and the root canal file are connected to the root canal handle; the motor is configured to drive the root canal file to rotate; and the first near field communication device is electrically connected with the motor, wherein the first near field communication device is configured to control the motor according to external information.

Since the first near field communication device can control the motor according to external information, and the motor can drive the root canal file to rotate, the working status of the motor can be adjusted through the first near field communication device by changing the external information, such that the working status of the endo motor can be modified. Such an adjustment method can simplify the steps of adjusting the working status of the endo motor, and improve the operation efficiency of the endo motor, thereby making the endo motor easy to use.

### Brief Description of Drawings

In order to more clearly illustrate the technical solutions of the embodiments of the present disclosure, the following will briefly introduce the accompanying drawings used in the embodiments. It should be understood that the following drawings only show some embodiments of the present disclosure, therefore, should not be regarded as a limitation on the scope, and those ordinarily skilled in the art can also obtain other related drawings based on these drawings without inventive effort.
FIG. 1 is a schematic structural view of an endo motor in an embodiment of the present disclosure;
FIG. 2 is a schematic view of external information configuration in an embodiment of the present disclosure;
FIG. 3 is a schematic structural view of a first near field communication device in an embodiment of the present disclosure;
FIG. 4 is a schematic structural view of a first near field communication device in another embodiment of the present disclosure; and
FIG. 5 is a flow chart of a control method for an endo motor in an embodiment of the present disclosure.

Reference numerals: 200-endo motor; 210-base; 220-root canal handle; 230-root canal file; 240-first near field communication device; 250-external information; 241-induction module; 251-external electronic induction tag; 252-label card; 260-mobile terminal.

### Detailed Description of Embodiments

In order to make the purpose, technical solutions and advantages of the embodiments of the present disclosure clearer, the technical solutions in the embodiments of the present disclosure will be clearly and completely described below in conjunction with the drawings in the embodiments of the present disclosure. Obviously, the described embodiments are a part of the embodiments of the present disclosure, rather than all of them. The components of the disclosed embodiments generally described and illustrated in the drawings herein can be arranged and designed in a variety of different configurations.

Accordingly, the following detailed description of the embodiments of the present disclosure provided in the accompanying drawings is not intended to limit the scope of the claimed disclosure, but merely represents selected embodiments of the present disclosure. Based on the embodiments in the present disclosure, all other embodiments obtained by persons of ordinary skill in the art without inventive efforts fall within the protection scope of the present disclosure.

It should be noted that similar numerals and letters denote similar items in the following drawings, therefore, once an item is defined in one drawing, it does not require further definition and explanation in subsequent drawings.

In the description of the present disclosure, it should be noted that the orientation or positional relationship indicated by the terms "up", "low", "inner" and "outer", if present, is based on the orientation or positional relationship shown in the drawings, or is the orientation or positional relationship that the product of the present disclosure is usually placed in use, which is only for the convenience of describing the present disclosure and simplifying the description, rather than indicating or implying that the referred device or element must be in a specific orientation, or be constructed and operated in a specific orientation, and therefore cannot be construed as limiting the present disclosure.

In addition, terms such as "first" and "second", if present, are used only for distinguishing descriptions, and should not be understood as indicating or implying relative importance.

It should be noted that the features in the embodiments of the present disclosure can be combined with each other under the condition of no conflict.

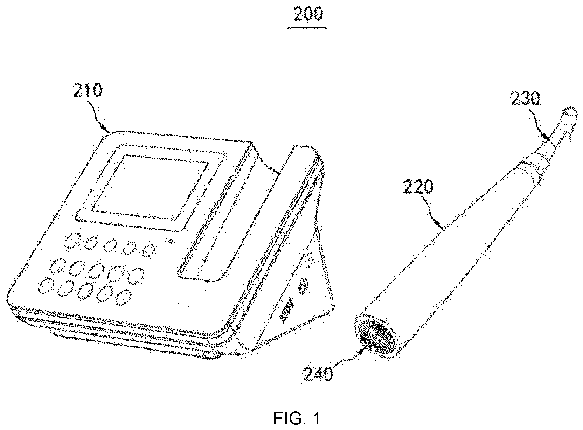

Referring to FIG. 1-FIG. 3, FIG. 1-FIG. 3 show the structure of the endo motor in the embodiment of the present disclosure. The embodiment provides an endo motor 200, wherein the endo motor 200 includes a root canal handle 220, a root canal file 230, a motor and a first near field communication device 240.

Both the motor and the root canal file 230 are connected to the root canal handle 220; the motor is configured to drive the root canal file 230 to rotate; and the first near field communication device 240 is electrically connected to the motor.

The first near field communication device 240 is configured to control the motor according to external information 250.

The working principle of the endo motor 200 is as follows.

The endo motor 200 includes a root canal handle 220, a root canal file 230, a motor and a first near field communication device 240, wherein both the motor and the root canal file 230 are connected to the root canal handle 220; the motor is configured to drive the root canal file 230 to rotate. The first near field communication device 240 is electrically connected to the motor, wherein the first near field communication device 240 is configured to control the motor according to external information 250.

Since the first near field communication device 240 can control the motor according to the external information 250, and the motor can drive the root canal file 230 to rotate, the working status of the motor can be adjusted through the first near field communication device 240 by changing the external information 250, as a result, the working status of the endo motor 200 is adjusted. Such an adjustment method can simplify the steps of adjusting the working status of the endo motor 200, and improve the operation efficiency of the endo motor 200, thereby making the endo motor 200 easy to use.

It should be noted that, in this embodiment, the first near field communication device 240 is an NFC sensor or an RFID radio frequency sensor.

The first near field communication device 240 can include an induction module 241 and a control module, wherein the induction module 241 is electrically connected to the control module. The induction module 241 is configured to sense external information 250 and generate induction signal, and the control module is configured to receive the induction signal and control the motor according to the induction signal.

Based on the above, according to the invention, the external information 250 includes a plurality of external electronic induction tags 251, and the induction module 241 is configured to sense any one of the external electronic induction tags 251 and generate an induction signal, wherein the control module is configured to control the motor according to the induction signal. It should be noted that after induction module 241 senses each external electronic induction tag 251 and generates an induction signal, the work status of the motor controlled by the control module according to the induction signal varies, that is, the motor has multiple working statuses under the control of the first near field communication device 240 and each external electronic induction tag 251 corresponds to one of the working statuses. After the induction module 241 senses one of the external electronic induction tags 251 and generates an induction signal, the control module controls the motor to work in corresponding working status according to the induction signal. Thus, by switching different external electronic induction tags 251 to be sensed by the induction module 241, the working status of the motor can be adjusted, thereby adjusting the working parameters of the root canal file 230, so that the endo motor 200 can quickly switch working status.

Moreover, this status switching method adopts different external electronic induction tags 251 to be sensed by the induction module 241. The switching process is simple and convenient, which can simplify the operation steps, thereby improving the user's operation efficiency, and making the endo motor 200 convenient to be used

Optionally, referring to FIG. 1-FIG. 3, in this embodiment, when configuring a plurality of external electronic induction tags 251, the induction module 241 can be connected to the root canal handle 220, so as to facilitate the induction between the external electronic induction tags 251 and the induction module 241. Along the extension direction of the root canal handle 220, the induction module 241 and the root canal file 230 are respectively located at two ends of the root canal handle 220

Therefore, when the user operates the root canal handle 220, the control of the motor can be completed by making the root canal handle 220 move and sensing one of the external electronic induction tags 251. When the endo motor 200 is in the working status corresponding with one of the external electronic induction tags 251, the working status of the endo motor 200 can be switched through the induction between the root canal handle 220 and other external electronic induction tags 251, and the working status is adjusted correspondingly to other external electronic induction tags 251.

**It** should be noted that, with such configuration mode, the external electronic induction tag 251 can be connected to the base 210, and the induction module 241 is connected to the root canal handle 220, thus the spatial position of the induction module 241 will be changed along with the movement of the root canal handle 220. Because the position of the base 210 is fixed, the position of the external electronic induction tag 251 connected to the base 210 will not change during use, and therefore, when adjusting the working status of the endo motor 200, the adjustment of the working status of the endo motor 200 can be accomplished by moving the root canal handle 220, thereby simplifying the operation steps and making the endo motor 200 easy to use.

Optionally, in other embodiments of the present disclosure, the endo motor 200 can further include a second near field communication device communicatively connected to the first near field communication device 240, wherein the first near field communication device 240 is configured to control the motor based on the information output by the second near field communication device. Since the endo motor 200 includes a base 210, the second near field communication device can be connected to the base 210 or built in other mobile communication devices, such as a mobile phone, according to the needs of use.

**In** such configuration mode, the external information received by the first near field communication device 240 is sent by the second near field communication device. Since the first near field communication device 240 can be communicatively connected with the second near field communication device, controlling the second near field communication device to send information to the first near field communication device 240 can accomplish the control of the motor. **It** should be noted that when the second near field communication device is connected to the base 210, a control system can be provided on the base 210 as well, wherein the control system includes a display and a controller electrically connected to the display. Therefore, the control system can control the second near field communication device to send information to the first near field communication device 240, thereby achieving the control of the motor. Optionally, in other embodiments of the present disclosure, the endo motor 200 further includes a base 210, wherein the induction module 241 can also be connected to the base 210. With such configuration mode, when the user uses the endo motor 200, since the induction module 241 is connected to the base 210, and the base 210 is relatively fixed, the position of the induction module 241 is unchanged, when the user uses the endo motor 200. At this time, the user can operate the external electronic induction tags 251 to make one of them move towards the direction close to the base 210 and be sensed by the induction module 241.

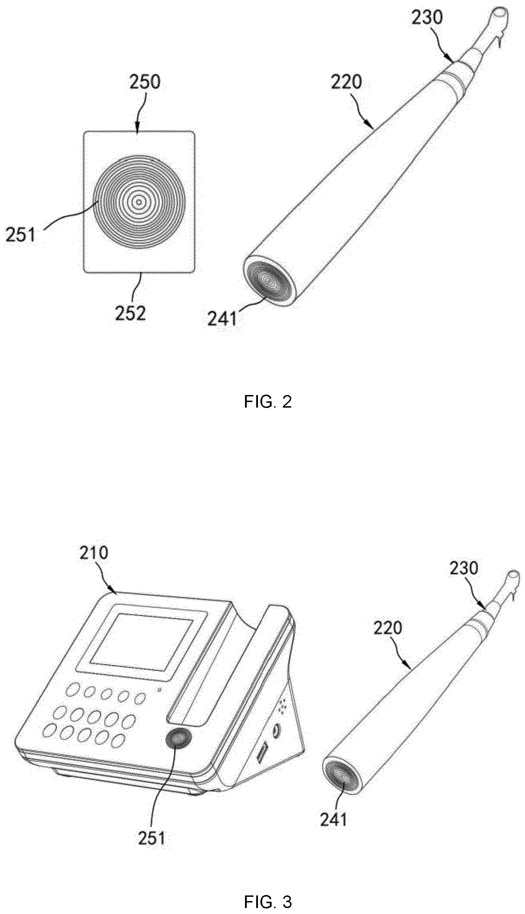

Optionally, referring to FIG. 1 and FIG. 2. In other embodiments of the present disclosure, when configuring multiple external electronic induction tags 251, in order to facilitate the induction between the external electronic induction tags 251 and the induction module 241, the induction module 241 can be connected with the root canal handle 220. The endo motor 200 also includes a plurality of label cards 252, wherein each label card 252 is provided with an external electronic induction tag 251.

Optionally, in other embodiments of the present disclosure, the endo motor 200 also includes a base 210, wherein the induction module 241 can also be connected to the base 210. The endo motor 200 further includes a plurality of label cards 252, each label card 252 is provided with an external electronic induction tag 251.

That is, the induction module 241 can be provided on the base 210, and a plurality of external electronic induction tags 251 can be arranged to a plurality of label cards 252 in one-to-one correspondence. As a result, the user can operate one of the label cards 252, so as to make one of the label cards 252 and the induction module 241 on the base 210 move close to each other, such that the induction module 241 senses the external electronic induction tag 251 on the label card 252, to complete the control of the motor. When the endo motor 200 is in a working status corresponding to one of the external electronic induction tags 251, by the induction between the external electronic induction tags 251 on the other label cards 252 and the induction module 241 on the base 210, the working status of the endo motor 200 can be switched to the working status corresponding to other external electronic induction tags 251. It should be noted that, in such configuration mode, since the external electronic induction tag 251 is arranged on the label card 252, and the label card 252 can be in a card structure, the spatial position of the external electronic induction tag 251 can be changed by operating the label card 252, such that the working status of the endo motor 200 can be flexibly adjusted.

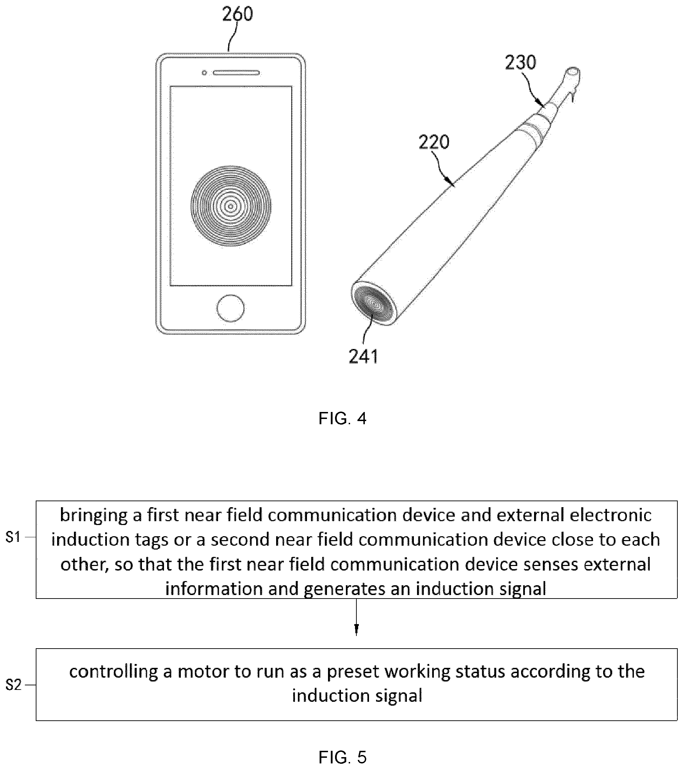

It should be noted that, referring to FIG. 4, FIG. 4 shows the structure of the first near field communication device in other embodiments of the present disclosure. In other embodiments of the present disclosure, the external electronic induction tag 251 can also be provided in other mobile terminals 260, such as a mobile phone. The induction method thereof is the same as what mentioned above, which will not be repeated herein.

Referring to FIG. 1-FIG. 5, FIG. 5 shows the steps of the control method of the endo motor 200 in the embodiment of the present disclosure. Based on the above content, the present disclosure provides a control method of the endo motor 200, and the steps of the control method of the endo motor 200 include:
S1: bringing the first near field communication device 240 and the external electronic induction tag 251 or the second near field communication device close to each other, so that the first near field communication device 240 senses external information and generates an induction signal; and
S2: controlling the motor to run as the preset working status according to the induction signal.

The principle of the control method of endo motor 200 is as follow.

Since the first near field communication device 240 can control the motor according to the external information 250, and the motor can drive the root canal file 230 to rotate, the working status of the motor can be adjusted by the first near field communication device 240 by changing the external information 250, thereby adjusting the working status of the endo motor 200. Such adjustment method can simplify the steps of adjusting the working status of the endo motor 200, and improve the operation efficiency of the endo motor 200, thus making the endo motor 200 easy to use.

Specifically, the external information 250 includes the second near field communication device or a plurality of external electronic induction tags 251, and the induction module 241 is configured to sense the second near field communication device or any one of the external electronic induction tags 251 and generate an induction signal. The control module is configured to control the motor based on the induction signal. Moreover, the motor has multiple working statuses under the control by the first near field communication device 240, and each external electronic induction tag 251 corresponds to one of the working statuses. Therefore, after one of the external electronic induction tags 251 is sensed by the induction module 241 and the induction signal is generated, the control module controls the motor to work in a corresponding working status according to the induction signal. Thus, by switching different external electronic induction tags 251 to be sensed by the induction module 241, the working status of the motor can be adjusted, thereby adjusting the working parameters of the root canal file 230, so that the working status of the endo motor 200 can be quickly switched.

Moreover, this status switching method adopts different external electronic induction tags 251 to be sensed by the induction module 241. The switching process is simple and convenient, which can simplify the operation steps, thereby improving the user's operating efficiency, and making the endo motor 200 easy to use and more flexible to use.

## Claims

1. An endo motor (200), wherein the endo motor (200) comprises external information (250), a root canal handle (220), a root canal file (230), a motor, and a first near field communication device (240);
the motor and the root canal file (230) are both connected to the root canal handle (220); the motor is configured to drive the root canal file (230) to rotate; the first near field communication device (240) is electrically connected to the motor; and
the first near field communication device (240) is configured to control the motor according to external information (250),
the first near field communication device (240) comprises an induction module (241) and a control module, wherein the induction module (241) is electrically connected to the control module, the induction module (241) is connected with the root canal handle (220), and the induction module (241) and the root canal file (230) are respectively located at two ends of the root canal handle (220),
**characterized in that**, the external information (250) comprises a plurality of external electronic induction tags (251), each of the plurality of external electronic induction tag (251) corresponds to one of working statuses of the motor, and the induction module (241) is configured to sense any one of the external electronic induction tags (251) and generate an induction signal, wherein the control module is configured to receive the induction signal and control the motor according to the induction signal to work in a corresponding working status.

2. The endo motor (200) according to claim 1, wherein
the endo motor (200) further comprises a base (210); and the induction module (241) is connected with the base (210).

3. The endo motor (200) according to claim 1, wherein
the endo motor (200) further comprises a plurality of label cards (252), each of which is provided with an external electronic induction tag (251).

4. The endo motor (200) according to claim 1, wherein
the endo motor (200) further comprises a second near field communication device communicatively connected to the first near field communication device (240), and the first near field communication device (240) is configured to control the motor according to information output by the second near field communication device.

5. The endo motor (200) according to claim 4, wherein
the endo motor (200) further comprises a base (210), wherein the second near field communication device is connected to the base (210).

6. The endo motor (200) according to any one of claims 1-5, wherein
the first near field communication device (240) and the second near field communication device are both NFC sensors or RFID radio frequency sensors.

7. A control method of the endo motor (200) according to any one of claims 1-6, **characterized in that** steps of the control method of the endo motor (200) comprise:
bringing a first near field communication device (240) and external electronic induction tags (251) or a second near field communication device close to each other, so that the first near field communication device (240) senses external information (250) and generates an induction signal; and
controlling a motor to run as a preset working status according to the induction signal.

## Patentansprüche

1. Endomotor (200), wobei der Endomotor (200) externe Informationen (250), einen Wurzelkanalgriff (220), eine Wurzelkanalfeile (230), einen Motor und eine erste Nahfeldkommunikationsvorrichtung (240) umfasst;
der Motor und die Wurzelkanalfeile (230) beide mit dem Wurzelkanalgriff (220) verbunden sind; der Motor so konfiguriert ist, dass dieser die Wurzelkanalfeile (230) in Rotation versetzt; die erste Nahfeldkommunikationsvorrichtung (240) elektrisch mit dem Motor verbunden ist; und
die erste Nahfeldkommunikationsvorrichtung (240) so konfiguriert ist, dass diese den Motor gemäß den externen Informationen (250) steuert,
die erste Nahfeldkommunikationsvorrichtung (240) ein Induktionsmodul (241) und ein Steuermodul umfasst, wobei das Induktionsmodul (241) elektrisch mit dem Steuermodul verbunden ist, das Induktionsmodul (241) mit dem Wurzelkanalgriff (220) verbunden ist, und das Induktionsmodul (241) und die Wurzelkanalfeile (230) jeweils an zwei Enden des Wurzelkanalgriffs (220) angeordnet sind,
**dadurch gekennzeichnet, dass** die externen Informationen (250) eine Vielzahl externer elektronischer Induktionstags (251) umfassen, jedes der mehreren externen elektronischen Induktionstags (251) einem der Arbeitszustände des Motors entspricht und das Induktionsmodul (241) derart konfiguriert ist, dass es eine jedes der externen elektronischen Induktionstags (251) erfasst und ein Induktionssignal erzeugt, wobei das Steuermodul so konfiguriert ist, dass es das Induktionssignal empfängt und den Motor entsprechend dem Induktionssignal so steuert, dass dieser in einem entsprechenden Arbeitszustand arbeitet.

2. Endomotor (200) gemäß Anspruch 1, wobei der Endomotor (200) eine Basis (210) umfasst, wobei das Induktionsmodul (241) mit der Basis (210) verbunden ist.

3. Endomotor (200) gemäß Anspruch 1, wobei der Endomotor (200) eine Vielzahl von Etikettenkarten (252) umfasst, von denen jede mit einem externen elektronischen Induktionstag (251) versehen ist.

4. Endomotor (200) gemäß Anspruch 1, wobei der Endomotor (200) weiterhin eine zweite Nahfeldkommunikationsvorrichtung umfasst, die mit der ersten Nahfeldkommunikationsvorrichtung (240) in Kommunikationsverbindung steht, und die erste Nahfeldkommunikationsvorrichtung (240) so konfiguriert ist, dass diese den Motor gemäß den von der zweiten Nahfeldkommunikationsvorrichtung ausgegebenen Informationen steuert.

5. Endomotor (200) gemäß Anspruch 4, wobei der Endomotor (200) eine Basis (210) umfasst, wobei die zweite Nahfeldkommunikationsvorrichtung mit der Basis (210) verbunden ist.

6. Endomotor (200) gemäß einem jeden der vorhergehenden Ansprüche 1 bis 5, wobei die erste Nahfeldkommunikationsvorrichtung (240) und die zweite Nahfeldkommunikationsvorrichtung beide NFC-Sensoren oder RFID-Funkfrequenzsensoren sind.

7. Ein Verfahren zur Steuerung des Endomotors (200) gemäß einem jeden der vorhergehenden Ansprüche 1 bis 6, **dadurch gekennzeichnet, dass** die Schritte des Verfahrens zur Steuerung des Endomotors (200) Folgendes umfassen
nah zueinander Bringen einer ersten Nahfeldkommunikationsvorrichtung (240) und externer elektronischer Induktionstags (251) oder einer zweiten Nahfeldkommunikationsvorrichtung, so dass die erste Nahfeldkommunikationsvorrichtung (240) externe Informationen (250) erfasst und ein Induktionssignal erzeugt; und
Steuerung eines Motors, so dass dieser gemäß dem Induktionssignal in einem voreingestellten Arbeitszustand läuft.

## Revendications

1. Endomoteur (200), dans lequel l'endomoteur (200) comprend des informations externes (250), une poignée (220) de canal radiculaire, une lime (230) de canal radiculaire, un moteur et un premier dispositif de communication en champ proche (240) ;
le moteur et la lime (230) de canal radiculaire sont tous les deux connectés à la poignée (220) de canal radiculaire ; le moteur est configuré pour entraîner la rotation de la lime (230) de canal radiculaire ; le premier dispositif de communication en champ proche (240) est électriquement connecté au moteur ; et
le premier dispositif de communication en champ proche (240) est configuré pour commander le moteur en fonction d'informations externes (250),
le premier dispositif de communication en champ proche (240) comprend un module d'induction (241) et un module de commande, dans lequel le module d'induction (241) est électriquement connecté au module de commande, le module d'induction (241) est connecté à la poignée (220) de canal radiculaire et le module d'induction (241) et la lime (230) de canal radiculaire sont respectivement situés aux deux extrémités de la poignée (220) de canal radiculaire,
**caractérisé en ce que** les informations externes (250) comprennent une pluralité d'étiquettes d'induction électroniques externes (251), chacune de la pluralité d'étiquettes d'induction électroniques externes (251) correspond à l'un des états de travail du moteur, et le module d'induction (241) est configuré pour détecter l'une quelconque des étiquettes d'induction électroniques externes (251) et générer un signal d'induction, dans lequel le module de commande est configuré pour recevoir le signal d'induction et commander le moteur en fonction du signal d'induction pour qu'il travaille dans un état de travail correspondant.

2. Endomoteur (200) selon la revendication 1, dans lequel
l'endomoteur (200) comprend en outre une base (210); et le module d'induction (241) est connecté à la base (210).

3. Endomoteur (200) selon la revendication 1, dans lequel
l'endomoteur (200) comprend en outre une pluralité de cartes (252) d'étiquette, chacune d'elles étant pourvue d'une étiquette d'induction électronique externe (251).

4. Endomoteur (200) selon la revendication 1, dans lequel
l'endomoteur (200) comprend en outre un second dispositif de communication en champ proche connecté en communication au premier dispositif de communication en champ proche (240), et le premier dispositif de communication en champ proche (240) est configuré pour commander le moteur en fonction d'informations délivrées par le second dispositif de communication en champ proche.

5. Endomoteur (200) selon la revendication 4, dans lequel
l'endomoteur (200) comprend en outre une base (210), dans lequel le second dispositif de communication en champ proche est connecté à la base (210).

6. Endomoteur (200) selon l'une quelconque des revendications 1 à 5, dans lequel
le premier dispositif de communication en champ proche (240) et le second dispositif de communication en champ proche sont tous les deux des capteurs NFC ou des capteurs de radiofréquence RFID.

7. Procédé de commande de l'endomoteur (200) selon l'une quelconque des revendications 1 à 6, **caractérisé en ce que** les étapes du procédé de commande de l'endomoteur (200) comprennent :
le rapprochement mutuel d'un premier de communication en champ proche (240) et d'étiquettes d'induction électroniques externes (251) ou d'un second de communication en champ proche, de telle sorte que le premier de communication en champ proche (240) détecte des informations externes (250) et génère un signal d'induction ; et
la commande d'un moteur pour qu'il tourne sous un état de travail prédéfini en fonction du signal d'induction.
